# EUROPEAN PATENT APPLICATION

(11) **EP 1 434 155 A1**
(43) Date of publication of application: **30.06.2004**
(21) Application number: 03388090.7
(22) Date of filing: 23.12.2003
(51) Int. Cl.: G06F 17/60

(54) **Method and system for automatic generation of an electronic balance sheet**

(30) Priority: 23.12.2002 DK 200201997
(71) Applicant: Danicom Management ApS, 2920 Charlottenlund (DK)
(72) Inventor: Lund, Kai, 2920 Charlottenlund (DK); Fog, Ivar, 2820 Gentofte (DK)
(74) Representative: Andersen, Poul Hoeg

(57) **Abstract**

This invention relates to a system (and method) for automatic accounting of income and expenses, the user system comprising communication means for receiving data from at least one remotely located information provider via a data network, said received data comprising at least one record/item comprising an identifier specifying the identity of a receiver or provider of a transaction, an amount indicating the value of the transaction, and a date of when the transaction took place, processing means for automatically categorising said received data according to a given user-modifiable hierarchy comprising at least one part, said categorising being executed on the basis of a set of rules, each rule specifying to which part of the hierarchy a given record/item is to be categorised in on the basis of at least a part of the identifier of the given record. In this way, automatic provision of an electronic balance sheet on the basis of information received from one or more information providers, like banks, etc. is enabled.

## Description

The present invention relates to a user system, a server system and method of automatic accounting of income and expenses.

Additionally, the invention relates to a computer readable-medium comprising a program, which may cause a computer to perform the method of the present invention.

Many banks offer one kind or another of online banking systems, where a user or a company having one or more bank/credit accounts in a single given bank may gain online access to various functions and receive relevant information/data for the accounts, like current balance, balance change/movements and date of each movement, short descriptive information of what the balance change relates to, etc. The latter information may e.g. comprise the name and/or ID number of a shop/company where a given item or service was purchased or sold to (either physically or online), the name of an employee receiving a salary, the name of a client/customer paying an invoice, the name of a company charging for a service, etc. In short, information relating to electronic record of transfer (+ or -) of money/change of balance for an account.

Some users, today typically private persons, may use this information to keep some sort of personal accounts/statement of income and expenses. Typically, this has to be made manually (e.g. in a separate application like a spread-sheet) or by very simple tools e.g. provided by the bank.

Additionally, a company may also use these kinds of online systems to obtain information about the company's bank/credit account(s) belonging to a single given bank.

If a person or company has accounts at two different banks there is present no simple means allowing for a single tool, system, program, etc. for obtaining information from these accounts since each different bank typically provide non-compatible online tools e.g. due to security issues, their own system requirements, etc.

A further problem arises for businesses when they receive receipts of payments of issued invoices or receipts of their payment for a requested and performed service. Usually, the company receives some kind of information relating to this and has an operator manually input the data/information in their accounting system, which takes up labour resources and introduces the risk of typing errors during the process.

The present invention involves the realisation that a company's statement of income and expenses greatly depends on the company's payments to others and reception of payment from others and that today these payments are to a great extent registered electronically by at least one third party, e.g. by a bank, in connection with one or more accounts that the payment(s) to or from relates to.

In this way, an overview of balance change(s) of various bank/credit accounts for the company e.g. at different financial companies/institutions, becomes identical or very similar to the company's account draft.

The present invention is also useful for private persons keeping bookkeeping of their private income and/or expenses.

An object of the invention is to provide a system that automatically generates an electronic balance sheet/an electronic statement of income and expenses without or with reduced involvement of a user/an operator.

A further object of the present invention is to provide a system that eliminates or reduces the risk of typing errors in connection with inputting and/or registering data into a accounting tool or the like.

Yet a further object of the present invention is to ease the mental and physical burden of an operator or user of a balance accounting system.

It is a further object to provide a simple automatic or semi-automatic overview and history of a financial situation/balance especially for smaller businesses, companies, etc. and/or private persons.

These objects and others are achieved by a system of the aforementioned kind that comprises
- communication means for receiving data from at least one remotely located information provider via a data network,
- said received data comprising at least one record/item comprising
   ○ an identifier specifying the identity of a receiver or provider of a transaction,
   ○ an amount indicating the value of the transaction, and
   ○ a date of when the transaction took place,
- processing means for automatically categorising said received data according to a given user-modifiable hierarchy comprising at least one part, said categorising being executed on the basis of a set of rules, each rule specifying to which part of the hierarchy a given record/item is to be categorised in on the basis of at least a part of the identifier of the given record.

Hereby, a system is obtained that enables automatic provision of an electronic balance sheet on the basis of information received from one or more information providers, like banks, etc.

The system also reduces or eliminates the need for manual input of data from invoices received or sent, etc. into a single database system, thereby reducing the administrative burden, which for businesses, companies, etc. thereby reduces costs for employees and/or frees employment resources for other purposes and for private persons frees time from administrating a personal budget.

Further, relevant information only has to be specified/input once or not at all.

Additionally, typing errors with respect to input or registration of data is avoided since amounts are categorised/moved automatically.

Additionally, a backup of an account/statement of income and expenses and/or the associated data/information is obtained, since the relevant data/information is readily stored at the relevant information provider(s), so that the account/statement may be generated in a very simple way by contacting the relevant information provider(s) and thereby simply categorising the information once more and re-generating the account/statement.

Further, a single overview of an account/statement of income and expenses based on various bank accounts even at different banks may be obtained.

In accordance with one embodiment of the system according to the present invention, the user system further comprises processing means for updating said set of rules by registering in a GUI (graphic user interface) a drag-and-drop action performed by a user on a graphic representation of a given record/item and on a graphic representation of a part of said hierarchy and updating said set of rules accordingly.

Hereby, a simple way of the system learning new/updated rules is obtained, since a user/operator simply drag-and-drops a graphic representation of a record (without an existing rule or for which the existing rule is to be changed/updated) on a graphical representation of a part of the hierarchy where it belongs or now belongs and registers this action and updates/generates a corresponding rule.

In accordance with another embodiment, the graphic representation of said hierarchy is an explorer-like interface and comprises at least one folder part, where each part may comprise one or more folder sub-parts.

In this way, a standardised well-known and very familiar interface/procedure is provided for the operator and/or user of the system when browsing information in the account/statement or manually categorising new records or records to have updated categorisation.

In one embodiment, the system comprises one or more of the following:
- a GUI part for at least one record/item for selection by a user, where a selection of said GUI part displays additional relevant and related information, and
- a GUI payment confirmation part for at least one record/item for selection by a user and an GUI accept/decline part, where a selection of said GUI part displays payment information comprising one or more of a descriptive part, an amount, an account from where the payment is to be made from and a date of payment, where a selection of accept of said GUI accept/decline part automatically generates an electronic payment comprising one or more of said payment information.

In this way, relevant information relating to a given item/record may be integrated in the system and is always available. Further, the normal work-flow of such approval/decline of invoices is automated and done more effectively. A normal work-flow would typically involve the invoice being received at the accounting department, the invoice being input manually in the accounting system, a paper copy being sent to the user having to approve/decline the payment, the user indicating an approval /declination of the payment, and the accounting department performing the payment or not in dependency of the user's indication.

In one embodiment, the hierarchy comprises one or more of:
- a part representing expenses,
- a part representing income,
- a part representing assets, and
- a part representing debt.

In this way, a simple and logical overview of a financial account/statement of income and expenses is obtained. Each part may comprise further parts (sub-parts) further distinguishing the information. As an example, the part representing 'expenses' may include sub-parts like: 'travel exp.', 'production exp.', 'employee exp.', etc.

In a preferred embodiment, the processing means is further adapted to derive a total amount for at least one given part of said hierarchy by adding all amounts of each record being categorised in the at least one given part, including sub-parts if any, of said hierarchy. In this way, information relating to a total sum/value/amount in a part and/or in a sub-part of the hierarchy is obtained and readily available for a user/operator. As an example, the total amount/value of all expenses would be derived, the total amount/value of all travel expenses and so on.

In one embodiment, the received data is sent from an information provider and received by the user system in a first representation and the user system further comprises a converter for converting the received data from the first representation to a second representation.

Hereby, it is possible to obtain data, in a very simple way, from different information sources, like different banks, etc., even if the information sources use different layout formats and/or physical data formats (e.g. different date formats, file formats, etc.). The various formats is converted to an 'internal' format (the second representation). This also facilitates easy inclusion of new information sources since the addition of a new information source would only require a change/update of the converting mechanism and only if the format of the new source is different from any format of existing sources. The formats may be different both in their type, e.g. ASCII, binary, compressed (zip, ace, etc.), HTML, XML, etc., and/or their layout/structure, e.g. comma separated, the order of the information items may differ, etc. As an example, information in a comma separated ASCII format where the information is ordered ID, amount/value, date would require different handling from information of a comma separated ASCII format with the ordering: amount/value, date, ID if no internal format and conversion or alternatively, several import mechanisms is available at the system.

In an alternative embodiment, the received data is sent from the information provider and received by the user system in a second representation and that said information provider comprises a converter for converting the received data from a first representation to the second representation. In this way, the conversion to the internal format/second representation of the data is done at the information provider location. Alternatively, the information provider may simply use the second representation, so that no conversion is needed.

In one embodiment, the first representation is an ASCII representation and the second representation is an XML representation.

In one embodiment, the said set of rules comprises
- a rule specifying a given part of the hierarchy that a given record/item is to be categorised in on the basis of a part or parts of an identifier of the given record, and/or
- a rule specifying a given part of the hierarchy that a given record/item is to be categorised in on the basis of an identifier of the given record.

Hereby it is possible to have automatic categorising of records using either the complete identifier or only a part or parts of the identifier. Automatic categorising on the basis of only a part or parts of the identifier is useful e.g. in situations where the identifier provided by the third party/information provider comprises a generic part e.g. describing the name of a chain of stores and a non-generic part describing the specific store in which the transaction took place. As an example, a rule specifying that identifiers comprising the part 'Kmart' would in this way categorise a record comprising the identifier '...Kmart 34243' and '... Kmart 41324' in the same part of the hierarchy (e.g. 'expenses for basic commodities') where the numbers identifies different Kmart stores.

The rules may be case-sensitive or not.

The invention also relates to a method of automatic accounting of income and expenses, the method comprising the steps of:
- receiving data from at least one remotely located information provider via a data network, said received data comprising at least one record/item comprising
   ○ an identifier specifying the identity of a receiver or provider of a transaction,
   ○ an amount indicating the value of the transaction, and
   ○ a date of when the transaction took place,
- automatically categorising said received data according to a given user-modifiable hierarchy comprising at least one part, said categorising being executed on the basis of a set of rules, each rule specifying to which part of the hierarchy a given record/item is to be categorised in on the basis of at least a part of the identifier of the given record.

In one embodiment, the method further comprises the step of updating said set of rules by registering in a GUI (graphic user interface) a drag-and-drop action performed by a user on a graphic representation of a given record/item and on a graphic representation of a part of said hierarchy and updating said set of rules accordingly.

In one embodiment, the graphic representation of said hierarchy is an explorer-like interface and comprises at least one folder part, where each part may comprise one or more folder sub-parts.

In one embodiment, the method comprises for one or more of the following steps:
- presentation of a GUI part for at least one record/item for selection by a user, where a selection of said GUI part displays additional relevant and related information, and
- presentation of a GUI payment confirmation part for at least one record/item for selection by a user and presentation of an GUI accept/decline part, where a selection of said GUI part displays payment information comprising one or more of a descriptive part, an amount, an account from where the payment is to be made from and a date of payment, and where a selection of accept of said GUI accept/decline part automatically generates an electronic payment comprising one or more of said payment information.

In one embodiment, the hierarchy comprises one or more of:
- a part representing expenses,
- a part representing income,
- a part representing assets, and
- a part representing debt.

In one embodiment, the method further comprises the step of deriving a total amount for at least one given part of said hierarchy by adding all amounts of each record being categorised in the at least one given part of said hierarchy.

In one embodiment, the received data is sent from the information provider and received by the user system in a first representation and that said method further comprises the step of converting the received data from the first representation to a second representation.

In an alternative embodiment, the received data is sent from the information provider and received by the user system in a second representation and that said information provider comprises a converter for converting the received data from a first representation to the second representation. Alternatively, the information provider may simply use the second representation, so that no conversion is needed.

In one embodiment, the first representation is an ASCII representation and said second representation is an XML representation.

In one embodiment, the set of rules comprises
- a rule specifying a given part of the hierarchy that a given record/item is to be categorised in on the basis of a part or parts of an identifier of the given record, and/or
- a rule specifying a given part of the hierarchy that a given record/item is to be categorised in on the basis of an identifier of the given record.

The method (and embodiments thereof) corresponds to the system (and embodiments thereof) and has the same advantages for the same reasons as described in connection with the system (and embodiments thereof).

Further, the invention relates to a computer-readable medium having stored thereon instructions for causing a processing unit or a computer system to execute the method described above and in the following. A computer-readable medium may e.g. be a CD-ROM, a CD-R, a DVD RAM/ROM, a floppy disk, a hard disk, a smart card, a network accessible via a network connection, a ROM, RAM, and/or Flash memory, etc. or generally any other kind of volatile and/or non-volatile media that provides a computer system with information regarding how instructions/commands should be executed and data/information handled and processed.

Hereby, when a computer is caused to retrieve electronic information - as a consequence of the contents of a computer-readable medium as described above - the advantages mentioned in connection with the corresponding method according to the invention are achieved.

The present invention also relates to a server system for providing information to a user system for automatic accounting of income and expenses, the server system comprising
- communication means for transmitting data to at least one remotely located user system via a data network,
- said data comprising at least one record/item comprising
   ○ an identifier specifying the identity of a receiver or provider of a transaction,
   ○ an amount indicating the value of the transaction, and
   ○ a date of when the transaction took place,
and where said data is adapted to be processed by processing means at a user system in order to facilitate automatic categorisation of said data according to a given user-modifiable hierarchy comprising at least one part, said categorising being executed on the basis of a set of rules, each rule specifying to which part of the hierarchy a given record/item is to be categorised in on the basis of at least a part of the identifier of the given record.

The server system for providing information to a user system for automatic accounting (and embodiments thereof) corresponds to the system (and embodiments thereof) and has the same advantages for the same reasons as described in connection with the user system (and embodiments thereof).

Further, the present invention also relates to a server system for automatic accounting of income and expenses, the server system comprising
- at least one record/item comprising
   ○ an identifier specifying the identity of a receiver or provider of a transaction,
   ○ an amount indicating the value of the transaction, and
   ○ a date of when the transaction took place,
- processing means for automatically categorising said at least one record/item according to a given user-modifiable hierarchy comprising at least one part, said categorising being executed on the basis of a set of rules, each rule specifying to which part of the hierarchy a given record/item is to be categorised in on the basis of at least a part of the identifier of the given record,
- communication means for transmitting data representing said hierarchy, comprising automatically categorised data, to a remotely located user system via a data network,

The server system for automatic accounting (and embodiments thereof) corresponds to the system (and embodiments thereof) and has the same advantages for the same reasons as described in connection with the user system (and embodiments thereof).

The present invention will now be described more fully with reference to the drawings, in which
Figure 1 a schematically illustrates an embodiment according to the present invention;
Figure 1b schematically illustrates an alternative embodiment according to the present invention;
Figure 1c schematically illustrates additional aspects of the present invention
Figure 2 illustrates a preferred embodiment of a record/item of the data received by the user system;
Figure 3 schematic block diagram of a user client system according to an embodiment of the present invention;
Figure 4 illustrates one example of a graphic representation of a user-modifiable hierarchy according to the present invention;
Figure 5a illustrates an embodiment of a first representation (ASCII) according to one aspect of the present invention;
Figure 5b illustrates an embodiment of a second representation (XML) according to one aspect of the present invention;
Figure 6 illustrates one example of a graphic user interface of an embodiment of the present invention;
Figure 7 illustrates a flowchart of an embodiment of the present invention.

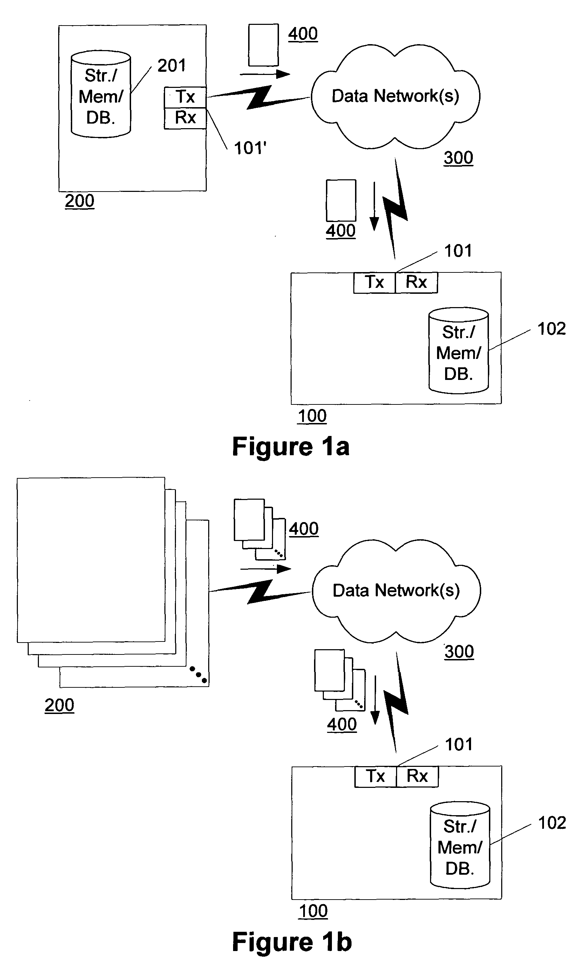

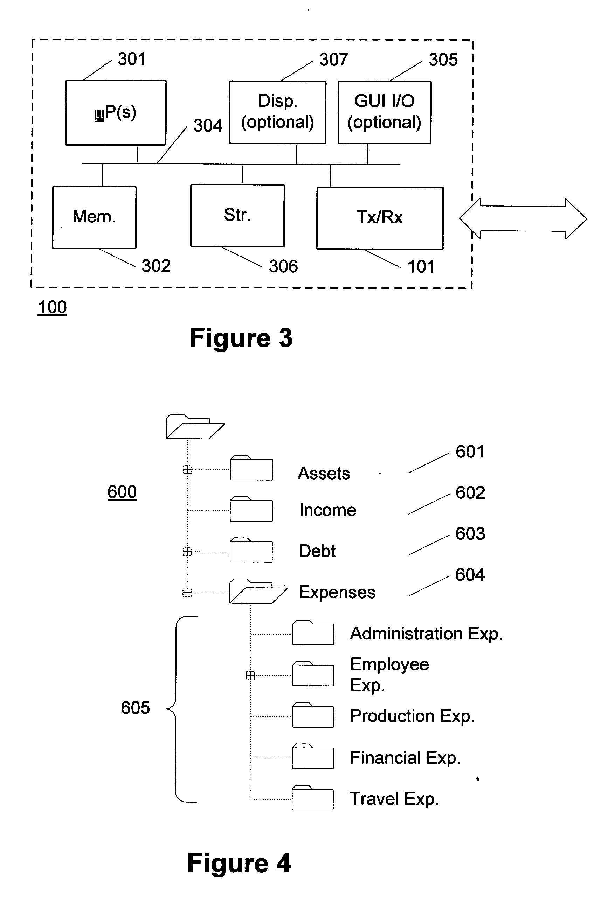

Figure 1a schematically illustrates an embodiment according to the present invention. Shown are a remotely located (from the user system) information provider system (200) and a user/client system (100) according to the present invention that communicates via wireless and/or wired data network(s) (300) like the Internet, a LAN, a WAN, an Intra-net, etc. or a combination thereof. The information system (200) comprises a transmitter and receiver (101') and storage and/or a memory and/or a database (201) comprising relevant data/information (400) to be provided to the user/client system (100) via the network (300). The information provider (200) is e.g. a web-server of a bank, a financial entity, a credit-card administration company, etc. or another type of company providing information from these or in general any kind of electronic record/information of transfer of money, change of balance, etc. The user/client system (100) comprises a transmitter and receiver (101) for communicating with the information provider (200) and receiving relevant data/information (400) and further comprises a storage and/or a memory and/or a database (102) for storing the received information/data (400). Additionally, the user/client system (100) also comprises one or more general and/or special purpose microprocessors (not shown in this figure but shown in Figure 3) for processing the received information/data (400) according to the present invention.

According to one aspect of the present invention, the data (400) is provided periodically and/or on request and/or on connection, etc. to/with the user/client system (100). The received data (400) comprises information for at least one transfer, where the information for each transfer comprises an identifier identifying a receiver or provider of the given transaction, a value/amount indicating the value of the transaction (e.g. including the sign), and a date of when the transaction took place. When the data (400) is received at the client/user system (100) it is automatically categorised according to the present invention in a given user-modifiable hierarchy, representing the overview/statement of income and expenses, on the basis of a set of rules specifying to which part of the hierarchy the information is to be categorised.

An initial hierarchy may be user-defined and/or pre-determined.

The automatic categorising of information of a transaction is preferably done on the basis of the identifier (either the complete identifier or a part or parts thereof) of the given information for the given transaction.

Preferably, the hierarchy comprises a part representing expenses, a part representing income, a part representing assets, and/or a part representing debt. Each part may further comprise further (sub-)parts in order to obtain a more detailed categorisation. As an example, the category part 'expenses' may comprise parts like 'Administration expenses', 'Production expenses' and so on. The part (and sub-parts) may be defined and/or labelled by the user/operator so that a particular user's/operator's/company's need is fulfilled.

In this way, information of every transaction (or just the new ones since last) for a bank account is categorised in the hierarchy according to the rules.

The data (received and/or processed) may be encrypted in order to obtain data security.

Preferably, the user/operator is presented with a graphical user interface (GUI) of the hierarchy (preferably in an explorer-like layout) and the data (400) received from the information provider (200) and e.g. further relevant information. In this way, easy navigation among the information in the various posts/parts of the hierarchy is obtained.

Further, the GUI may also be used to provide easy user handling of various actions like performing updating/changing existing rules, performing manual categorisation, adding new rules for a given type of record/item, etc.

The present invention also facilitates easy correction of items/records being categorised wrongly, by simply moving the record/item to the category where it belongs as opposed to 'normal' accounting procedures in traditional accounting where firstly a record should be included in the statement of income and expenses that annuls/cancels the erroneous categorised item/record and secondly a new record/item with the correct information should be accounted in the appropriate category.

In addition an operation of enabling a value/amount of a single record/item to be split/divided in at least two different categories is preferably also available. In this way, a single record/item of a single payment, transaction, invoice, etc. that covers expenses that belongs to two or more categories could be handled in a very easy way. For example, a single record/item representing travel expenses (e.g. of a total of 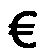 1.000) of three people may in this way be categorized in a 'Travel Expense' group/category/part of each person with their respective share/part of the total expense (e.g. 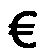 250 in person nr. 1's 'Travel Expenses', 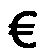 500 in person nr. 2's 'Travel Expenses' and 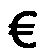 250 in person nr. 3's 'Travel Expenses'.

Further, it is preferably possible to manually generate records/items to be categorised. This could e.g. be used to generate a record of e.g. the depreciation of stock of goods, company buildings, cars, etc. a so that the statement of income and expenses balances at the end of a financial term.

In this way, a dynamic, user-friendly and very flexible way of managing a statement of income and expenses is provided which is easy and intuitive to learn to use.

It is apparent that several client systems may be connected to the same web-server for receiving their own information. By letting a user system do the categorisation, receive and process user input, etc. a speed advantage over central systems is achieved as the transfer rate (even with broadband connections today) is very slow compared with locally processed data and response times.

Additionally, a backup of an account/statement of income and expenses and/or the associated data/information is obtained, since the relevant data/information is readily stored at the relevant information provider(s), so that the account/statement may be generated in a very simple way by contacting the relevant information provider(s) and thereby simply automatically categorising the information once more and re-generating the account/statement.

Further, backup of the existing set of categorisation rules (and e.g. other relevant information) may be provided, e.g. by sending a digital representation of these via a network to another location/system, which e.g. may be the information provider or another system for safe-keeping.

In an alternative embodiment, the automatically categorisation according to the present invention is performed at a central location, e.g. at (one of) the information provider system(s) (200). In this way, the client system (100) only needs to receive information representing the hierarchy with the automatically categorised records instead of receiving the records and performing the categorisation at the user's system. Preferably, the user may in this embodiment still connect to the central location and perform the functions described throughout the text. The difference is only in where (locally or centrally) the processing is done.

In yet another alternative embodiment, the data and/or the processing may be done both locally and centrally e.g. with a synchronisation scheme upon connection between the central and local system. In this way, the user may perform tasks like updating or generating rules, manually categorise records/items, etc. while not being connected. Further, new records/items may (ongoing) be categorised at the central location before the user connects, so they are ready when the user connects.

Upon connection, the user system and the central/server system synchronises. Upon synchronisation changes are determined and synchronised according to some rules (e.g. user system takes precedence over server system, the other way around, etc.) and/or the user may be prompted to determine which changed rule is the correct one/should be used. This also generates a backup of the statement at the central location. Further, it is only required to communicate the changed data thereby saving bandwidth.

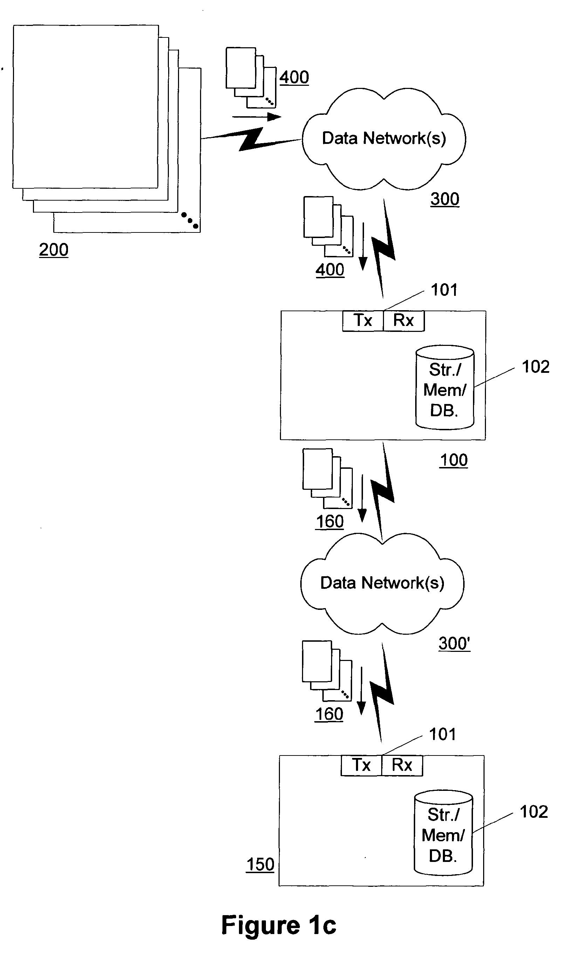

Figure 1b schematically illustrates an alternative embodiment according to the present invention. Shown is an embodiment that corresponds to the one shown in Figure 1 a with the exception that several (2 or more) information providers each transmit relevant data/information (400) via at least one network (300) to the user system (100) as illustrated by the shown several information providers (200) and the several instances of data (400).

In this way, a user system (100) only needs one program/system to handle, manage and receive information from accounts of different information providers like different banks, etc.

The user system may further comprise a converting mechanism for converting the received data in a given representation to an internal representation.

Hereby, it is possible to obtain data, in a very simple way, from different information sources, like different banks, etc., even if the information sources use different formats. The various formats is converted to an 'internal' format. This also facilitates easy inclusion of a use of new information sources since the addition of a new information source would only require a change/update of the converting mechanism and only if the format of the new source is different from any format of existing sources. A format may be different both in their type, e.g. ASCII, binary, compressed (zip, ace, etc.), HTML, XML, etc., and their structure and/or layout, e.g. comma separated, the order of the information items may differ, etc. As an example, information in a comma separated ASCII format where the information is ordered ID, amount/value, date would require different handling from information of a comma separated ASCII format with the ordering: amount/value, date, ID if no internal format and conversion or alternatively, several import mechanisms would be present at the system.

As one example, the first representation is an ASCII representation and the second representation is an XML representation.

The converter may be implemented in the main program, as an independent program or as a plug-in/module. Alternatively, the converter is implemented at and run by the information provider (200).

In an alternative embodiment, as described in connection with Figure 1a, the functionality according to the present invention may be provided centrally, e.g. at one of the information providers, instead of locally. The information provider providing the functionality may still then receive information from other information providers (200). In yet another embodiment, the functionality is provided both centrally and locally with the option of synchronisation, also as described elsewhere.

Figure 1c schematically illustrates additional aspects of the present invention. Shown are one or more information providers (200) that communicate data (400) to at least one user/client system (100) via a data network (300) as described elsewhere. Further, the user/client system (100) communicates additional data/information (160) via a data network (300') to at least one additional system (150).

The additional system (150) also comprises a transmitter and receiver (101) for communicating with the user/client system (100) and receiving relevant data/information (160) and further comprises a storage and/or a memory and/or a database (102) for storing the received information/data (160). Additionally, the additional system (150) also comprises one or more general and/or special purpose microprocessors (not shown) for processing the received information/data (400) according to further aspects of the present invention.

The data network (300) and the data network (300') may be the same or two different networks.

A schematic block diagram of an additional user/client system could correspond to the one shown in Figure 3 for a user/client system (100).

According to one embodiment/aspect of the present invention, the additional system (150) is a system of an official authority. The information communicated to the additional system (150) from the user/client system (100) may e.g. comprise information relevant to various electronic reports of one or more numbers representing information like VAT, tax, etc. where these numbers are derived automatically e.g. in connection with an end of a fiscal/financial term.

In this way, a more efficient and cost-reductive way of reporting such numbers to official authorities is obtained.

In relation to communicating information with an official authority it may be important that a user is not able to meddle, change, etc. the data received from the information provider prior to be sent to an authority. This may e.g. be achieved by using a digital fingerprint, a hash-scheme, etc., which are well known in the prior art. Further, the data received from the information provider may be stored encrypted on the user system and only be decrypted by the main program when the data is to be retrieved internally, i.e. for categorisation, display, or other functions as described elsewhere. In this, way the user is able to perform categorisation and various functions on the received data without having the possibility to change them. Derived information, according to the present invention, applicable to be sent to an official authority would then not be editable, modifiable, etc., so that such an automatic reporting to the authority would be acceptable.

According to another embodiment/aspect of the present invention, the additional system (150) is an employee system or another type of system.

The information (160) communicated to the additional system (150) from the user/client system (100) may e.g. comprise payment information so that the employee is able to accept or decline a payment. The payment information (160) preferably comprises one or more of: a descriptive part, an amount, an account from where the payment is to be made from, a date of payment, etc.

After reception of approval from the second system (150) at the first user/client system (100) information relating to the actual payment, transferal of money, etc. is sent to the one or more information providers/financial entities (200) in the case of approval. In this way, the normal work-flow of such approval/decline of invoices automated and done more effectively. A normal work-flow would typically involve the invoice being received at the accounting department, the invoice being input manually in the accounting system, a paper copy being sent to the user having to approve/decline the payment, the user indicating an approval /declination of the payment, and the accounting department performing the payment or not in dependency of the user's indication.

Further, a digital image of a scanned invoice (e.g. for ordinary received invoices input in the system) may be included in the information (160). This digital image may be stored together with the record in the hierarchy so that a copy of the invoice is readily available. Additionally, further information like who generated the payment request and/or who approved it may also be stored in connection with the record/item in the hierarchy.

In this way, relevant and related information is always available and may be integrated with the system as long as the information is or may be converted to digital content.

A user/client system may also be connected to communicate with one or more additional systems according to both aspects, i.e. of both internal (employees) and external (official authorities) type.

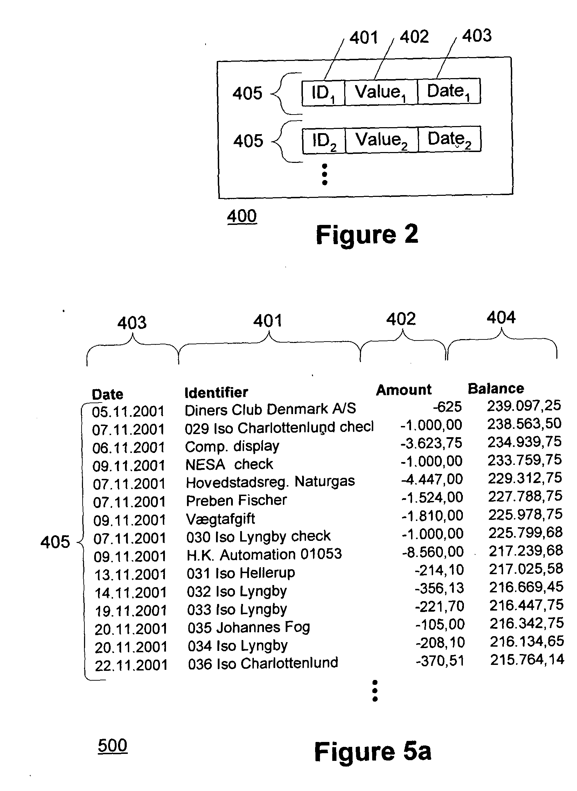

Figure 2 schematically illustrates a preferred embodiment of data received by the user system. Schematically shown is an example of data (400) received from an information provider and provided to a user system, where the data (400) comprises at least one information record/item (405) for each given transaction that information relates to. Each information record/item (405) comprises an identifier (401), a value/amount (402) and a date (403). The identifier (401) specifies the identity of a receiver, provider and/or subject of a given transaction e.g. by a letter and/or number combination. The value/amount (402) indicates the value/size of the given transaction e.g. including a '-' sign (if the transaction is a withdrawal, deduction, etc) of the transaction, i.e. specifying if the transaction is a deposit/payment or a withdrawal/receipt of payment to/from the owner of the account. Alternatively, the sign of the transaction may be represented by an additional field letting the amount (402) being a value only. Further, information regarding a specific currency that the transaction is in may also be specified. The date field (403) specifies at which actual date the given transaction took place in a suitable format.

The specific formats of the identifier (401), the amount/value (402), and the date (403) would usually be determined by the information provider and the specific format of various information providers could differ. However, due to the converting mechanism mentioned earlier, this would not pose any problems as long as a given format stays consistent from each contact with an information provider. A change of format would require the converter according to the invention to be updated/changed accordingly.

Preferably, the categorising is done on the basis of the complete identifier and/or a part or parts thereof.

Each information record/item (405) may additionally comprise additional fields specifying other relevant/interesting information like the current balance, etc.

In one embodiment, the data/information received from the information provider is encrypted and is decrypted at the user system according to an encryption/decryption scheme. Such encryption/decryption schemes are well known in the prior art.

Alternatively, the data (400) may comprise (e.g. in addition to the records mentioned above) information representing the hierarchy comprising already categorised records if this is done centrally and/or synchronisation information, as described elsewhere.

Figure 3 schematic block diagram of a user system according to an embodiment of the present invention. Shown is a user system (100) according to an embodiment of the present invention comprising one or more micro-processors (301) connected with a memory/storage (302; 306) and a display (307) via an internal data/address bus (304) or the like. The user system (100) also comprises communication means (101) for communication with the remotely located system via a network as described elsewhere. The memory (302) and/or storage (306) is used to store and retrieve the received information and the rules together with executable computer code for providing the functionality according to the invention. The micro-processor(s) (301) is responsible for the automatic categorisation, update of rules, calculation of total, etc.

An information provider system could also be like the one shown in Figure 3.

Figure 4 illustrates one example of a graphic representation of a user-modifiable hierarchy according to the present invention. The graphical representation of the statement of income and expenses hierarchy (600) is preferably an explorer-like interface that comprises a number of main-parts/folders (601, 602, 603, 604), where each main part/folder (601, 602, 603, 604) may comprise further sub-parts/folders (605). Each sub-part may also comprise further sub-parts, and so on. The structure of the hierarchy (600) is user-modifiable and may be updated/changed to suit a given user's/operator's/company's need. When received records automatically are being categorised in the hierarchy a copy of or a reference to the information is put in the appropriate part or sub-part (601, 602, 603, 604, 605) according to given user-determined and/or pre-determined rules, as explained elsewhere. In this way, an easy overview is obtained since the user/operator simply has to click on a given part/folder and be presented (elsewhere in the GUI) with the records. Additional information like a total amount, summation, etc. for all the records of the particular part/folder may also be presented.

In effect, the hierarchy becomes a representation of a statement of income and expenses where each folder represents a given post that is easy to navigate in and is well known.

Preferably, the hierarchy (600) is also used to update/change existing rules, manually categorise record(s)/item(s) and/or add new rules by simple drag-and-drop actions. By moving a record/item being currently categorised in a (sub-) part e.g. 'Travel expenses' to a (sub-) part e.g. 'Administrations Costs' the rule categorising that or those particular records/items changes to reflect that (e.g. after user-confirmation) so that all existing and/or new records/items now would be categorised in the 'Administrations Costs' instead of 'Travel expenses' The same procedure is preferably also used in connection with generating a new rule, i.e. dragging a record/item to a specific category would generate a new rule for such records/items.

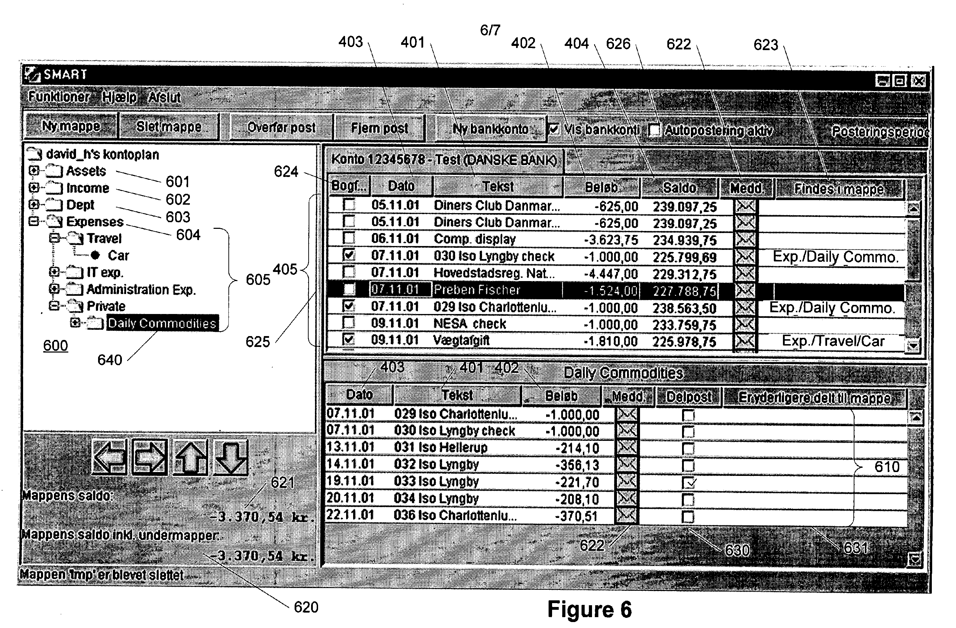

Examples of the graphical representation of the hierarchy (600) in a GUI is shown in connection with Figure 6.

The hierarchy (600) may also be used in connection with obtaining information for a budget as this could involve obtaining information of what various items were in the last budget term/year. The hierarchy (600) provides an easy access to both overall figures/numbers and more detailed by selecting/browsing main-parts, sub-parts, sub-parts of sub-parts, etc. In this way, precise and factual numbers/data of income and expenses in previous budget year(s)/term(s) is readily available, which may greatly assist a user/operator in assessing the figures/numbers of a coming budget year/term for the various items according to the hierarchy (600).

Further, an easy, precise and factual status of year-to-date amounts/values is available.

For example, if a user has to make a budget for e.g. car expenses, the user may select a folder/part 'Car Expenses' (typically located under 'Expenses'). The current total (e.g. year-to-date) of a company's expenses in this relation would then be readily available to the user. Further, the user could expend the 'Car Expenses' folder/part e.g. in order to access a part for each employee that has a company car in order to obtain more detailed information, e.g. seeing how much was spent on insurance for a specific user having a company car. Even further, it is preferably also possible to determine a total for every record in the folders/parts categorised in 'Car Expenses' that comprises an identifier of the insurance records, thereby obtaining information across the hierarchy.

Figure 5a illustrates an example of data in a first representation (ASCII) according to one aspect of the present invention. Shown is one example of a format/a first representation for data being sent to the user/client system.

Shown is a number of records (405), each record (405) comprising an identifier value (401), a date value (403) and an amount value (402) as explained in connection with Figure 2. In this particular example, each record also comprises a field having a value (404) representing the current balance of the given account, also provided from the information provider. This information is automatically categorised according to the present invention thereby being included in the balance/overview of income and expenses. Alternatively, the information may be converted to another format prior to being processed, as explained elsewhere.

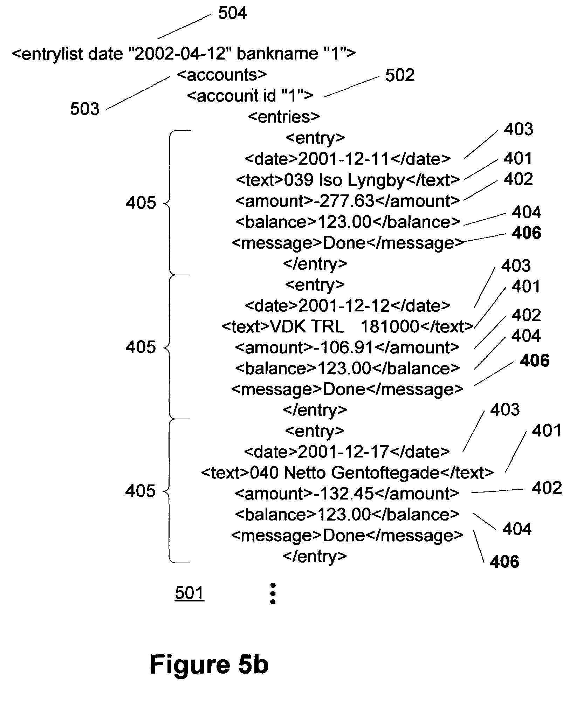

Alternatively, the format of the information may be different, e.g. XML (in this case it would look like shown in Figure 5b), HTML, RTF, Word, Excel, etc. Additionally, the arrangement of data may be different, e.g. first column representing 'Amount' instead of 'Date' and so on.

Figure 5b illustrates an example of a second representation (XML) according to one aspect of the present invention. Shown is the data received from the information provider in an XML-format. The XML document (501) comprises, in this example, a number of structures defining the received data according to the well-known XML-format. The XML document (501) comprise one overall structure (504) '<entrylist date="2002-04-12" bankname="1">' that preferably comprises an indication of the actual date of when the data is provided from the information provider and an indication of a name and/or a code representing the name/identity of the information provider providing the data. The overall structure comprises an accounts structure (503) '<accounts>' that comprises at least one bank/credit account groups/structures (502) '<account id="1">' for each bank/credit account that the data relates to. Each account structure (502) preferably also specifies an indication of the identity of the specific bank/credit account. Each account structure (502) comprises at least one entry, where each entry comprises a record (405) of information relating to a balance change for the given account that the account structure (502) is for. Each record (405) of information comprises identifier (listed between <text> and </text> in the example of the figure) value (401), a date value (403) and an amount value (402) as explained above. Preferably, each record (405) further comprises a value (404) representing the current balance of the given account and e.g. further information (406) e.g. specifying the status of whether the record has been categorised or not. One example of a record (405) in an exemplary XML format is:
<entry>
   <date>2001-12-11 </date>
   <text>039 Iso Lyngby</text>
   <amount>-277.63</amount>
   <balance> 123.00</balance>
   <message>Done</message>
</entry>

This information is then received by the client/user system and processed according to the present invention, whereby the information of records is categorized according to the user-modifiable hierarchy.

As mentioned, the system may comprise a converter for converting information received in one or more different physical and/or layout format into a single format (e.g. an XML format) that the system uses. Hereby, it is possible to obtain data, in a very simple way, from different information sources, like different banks, etc., even if the information sources use different layout formats and/or physical data formats (e.g. different date formats, file formats, etc.).

Figure 6 illustrates one example of a graphic user interface of an embodiment of the present invention. Shown is an example of a graphical user interface (GUI) that comprises, in this particular example, three GUI parts.

A first GUI part that comprises a graphical representation of the records/items (405) that has been received from an information provider (200 in Figures 1a and 1b) and, if any, any manually inputted records/items (405).

A second GUI part that displays a user-modifiable hierarchy (600) in an explorer-like interface where the hierarchy (600) comprises a number of main-parts/folders (601; 602; 603; 604), where each main part/folder (601; 602; 603; 604) may comprise further sub-parts/folders (605), as described previously.

Relevant information of a currently selected hierarchy part (640) is shown in the third GUI part.

Preferably, the GUI also comprises traditional means for manipulating/operating the GUI and/or parts thereof, e.g. like scrolling means/bars for scrolling in information to large to be displayed in a window at a single time, menus, window re-sizing means, etc.

In the first GUI part, the information, in this example, comprises for each record/item (405) an identifier (401), a value/amount (402), a date (403) and a field having a value (404) representing the current balance of the given account, as explained in connection with e.g. Figures 5a and 5b. Further shown is for each record/item (405) an indication (624) (e.g. a checkmark as in this example) of whether a given record/item (405) already has been categorised in the hierarchy (600) and an indication/description (623) of where in the hierarchy (600) the given record/item has been categorised. In this example, it may be seen that only the records/items (405) (of the currently displayed) with the identifiers (401) '030 Iso Lyngby check', '029 Iso Charlottenlund' and 'Vasgtafgift' has been categorised in the statement of income and expenses hierarchy (600) and that these records/items (405) is located in 'Expenses/Daily Commodities', 'Expenses/Daily Commodities' and 'Expenses/Travel/Car', respectively.

By initiating categorisation (e.g. by selecting/pressing a button), the records/items (405) that has an existing rule is automatically categorised in the hierarchy (600) as described earlier.

Records/items (405) without any existing rule may simply be dragged-and-dropped on an appropriate hierarchy part/folder (601; 602; 603; 604) or sub-part/folder (605) in order to be categorised in the selected part/folder. A rule is then generated for that particular record/item so that new records/items (405) with a similar identifier (401) automatically may be categorised to the same part/folder in the future. Further the rule may be specified using only a part or parts of the identifier (401) so that similar record/items (405) is categorised in the same folder/part.

An existing rule may also be updated simply by dragging a record/item already placed in a given part/folder to another part/folder whereby the system updates the rule accordingly. Preferably, the user/operator is prompted for determining if the changed rule should apply for similar records, i.e. having the same (at least in part or parts) identifier (401).

In this way, easy generation and/or update of categorisation rules are provided. Additionally, the system/method according to the present invention will become automated to a greater degree as the system/method is used an a greater number of rules is added while still maintaining the flexibility of handling new and/or manually input items/records.

Preferably, it is also possible to categorise a given record/item in multiple categories thereby splitting the amount (402) of the given record/item e.g. when performing the drag-and-drop action of a record/item or by selecting a record/item already categorised. This enables an amount (402) of a single record/item to be allocated to different parts of the hierarchy (600), which may be useful if the amount of a single invoice belongs to different posts in the statement of income and expenses hierarchy (600).

Automatic categorisation may be enabled e.g. by selecting a check-mark (626), setting an item in a menu, etc. whereby categorisation is initialised automatically e.g. upon start-up, contact with an information provider, etc.

Also shown in the first GUI part is a currently selected record/item (625) selected among the currently displayed records/items (405).

An icon/indication (622) is also shown for each record/item (405) that enables the display of further/additional information (if any) e.g. by double-clicking. The further/additional information may e.g. comprise a digital image of a scanned invoice (e.g. for ordinary received invoices input in the system) (as explained in greater detail in connection with Figure 1c) and/or other relevant information.

This enables the provision of all relevant available digital information always to be ready at hand (by the simple click or selection) directly in connection with actual record. As mentioned, this digital information may e.g. comprise a digital scanned copy of the actual paper invoice, other related information, etc.

The second GUI part also comprises an indication of a currently selected hierarchy (sub-)part (640) (in this example 'Daily Commodities' located in 'Private' that itself is located in 'Expenses').

Further the second GUI part also comprises information (621) displaying the sum of amounts for each record/item in the currently selected hierarchy part (640) and information (620) displaying the sum of each record/item of the currently selected hierarchy part (640) and of records/items in each sub-parts (their sub-parts and so on, if any). In this particular, example the two sums are equal since there are no sub-parts in the part 'Daily Commodities'.

Relevant information for the currently selected hierarchy part (640) is shown in the third GUI part that enables display of each record/item (610) belonging to the currently selected hierarchy part (640). In this example, a date (403), an identifier (401), an amount (402) and an icon/indication (622) that enables the display of further/additional information (if any) for each of 7 records/items (610) presently categorised in the currently selected hierarchy part (640) is displayed. Further an indication (630) whether the amount of a given record/item is shared/split is also given as well as an indication/description of where the other record(s)/item(s) is categorised in the hierarchy (600).

As may be seen, a rule, in this particular example, for records/items to be categorised in 'Expenses/Private/Daily Commodities' could e.g. be all records/items having an identifier (401) comprising the (sub-)string "Iso". The GUI can be the same independently of whether the main processing is done locally, centrally or both (e.g. using synchronisation).

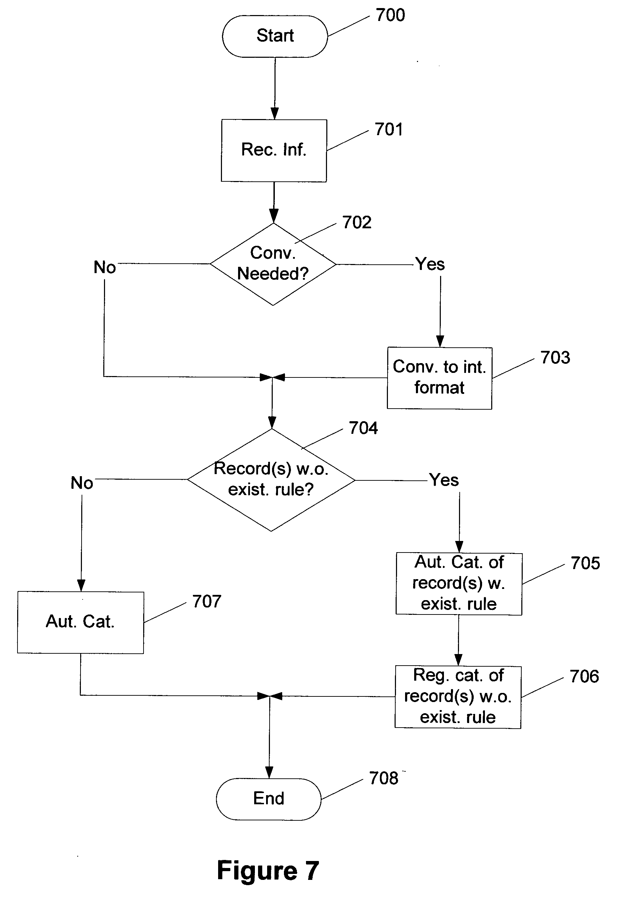

Figure 7 illustrates a flowchart of an embodiment of the present invention. The method starts at step (700). At step (701) data is received at a client/user system from one or more information providers. The data comprises at least one record/item comprising an identifier specifying the identity of a receiver or provider of a transaction, an amount indicating the value/size of the transaction, and a date of when the transaction took place, as explained before. Preferably, the information is received in an encrypted and/or encoded format and is decrypted and/or decoded (not shown) before proceeding.

The received data may in one embodiment be in a given format of a group of pre-determined formats. At step (702) it is determined whether a conversion is needed of the format that the data was received in to an internal useable format. If this is the case, a conversion is done at step (703) by a converter that converts the received format into an internal supported format, e.g. from ASCII to XML. This has the advantage that several formats may be supported (e.g. form different information providers) but only one format is used by the method during categorising, calculation, further processing, etc, which reduces the complexity of the main program/method. After the conversion is done, the method proceeds to step (704). If a single format is used by the client system(s) and the information provider(s) steps (702) and (703) is not needed.

If the test at step (702) is no, i.e. the received data is in an internal supported format, the method proceeds directly to test (704).

The conversion step (703) may e.g. be done by the user/client system receiving and categorising the information or may alternatively be done by a separate module/program. Additionally, the conversion may also be done before the data is received by a client/user system, e.g. at an information provider.

In an alternative embodiment, the conversion test (702) and the conversion step (703) is not needed. This requires that the received data has to be in a known supported 'internal' format, e.g. of several known formats.

At step (704) it is determined if any of the received record(s) do not have an existing associated categorising rule. In the affirmative, step (705) is executed where an automatic categorisation is performed for each record having an associated rule (if any). The data is then categorised in the hierarchy according to the associated rule(s). The categorisation is done on the basis of the received identifier for each record. Either on the basis of the complete identifier or one or more parts of the identifier dependent on the specific rule.

After the categorisation is done a manual categorisation may be done at step (706) for records that does not have an associated rule. This categorisation is done manually e.g. by a drag-and-drop action using a computer-mouse or other similar device or using input via a keyboards. When the manual categorisation takes place it is registered (if the user wishes) and corresponding rules are generated. In this way, a user/operator only has to manually categorise a new/unknown record once.

If all records have an associated rule, as tested in step (704) the method proceeds to step (707) where information of each record is categorised on the basis of the identifier of each record.

After step (707) or step (706) is done the method ends at step (708) and resumes an idle state (e.g. awaiting user/operator commands/actions) or performs other tasks.

Preferably, the method also comprises a step of updating existing rules. This preferably is done manually by mouse and/or keyboard interaction with the user/operator. If the user/operator drags one record from one part of the hierarchy to another part of the hierarchy the existing rule for an identifier of that record may be changed (e.g. after user confirmation).

If the automatic categorisation is done centrally, step (701) is not necessarily done (unless additional information is received from further information providers) but instead information is transmitted to the user system after automatic and/or manual categorisation (using input from the remote user) have taken place, e.g. before step (708). The conversion step (702, 703) may in this embodiment not be needed unless additional information is received from further information providers.

If the automatic categorisation is possible both centrally and locally, step (701) may comprise the reception/transmittal of synchronisation information and e.g. user input.

## Claims

1. A user system for automatic accounting of income and expenses, the user system (100) comprising
• communication means (101) for receiving data (400) from at least one remotely located information provider (200) via a data network (300),
• said received data (400) comprising at least one record/item (405) comprising
○ an identifier (401) specifying the identity of a receiver or provider of a transaction,
○ an amount (402) indicating the value of the transaction, and
○ a date (403) of when the transaction took place,
• processing means (301) for automatically categorising said received data (400) according to a given user-modifiable hierarchy comprising at least one part, said categorising being executed on the basis of a set of rules, each rule specifying to which part of the hierarchy a given record/item (405) is to be categorised in on the basis of at least a part of the identifier (401) of the given record (405).

2. A system according to claim 1, **characterized in that** said user system (100) further comprises processing means (301) for updating said set of rules by registering in a GUI (graphic user interface) a drag-and-drop action performed by a user on a graphic representation of a given record/item (405) and on a graphic representation of a part of said hierarchy (600) and updating said set of rules accordingly.

3. A system according to claims 1 - 2, **characterized in that** said graphic representation of said hierarchy (600) is an explorer-like interface and comprises at least one folder part (601, 602, 603, 604), where each part may comprise one or more folder sub-parts (605).

4. A system according to claims 1 - 3, **characterized in that** said system comprises for one or more of the following:
• a GUI part (622) for at least one record/item (405) for selection by a user, where a selection of said GUI part (622) displays additional relevant and related information, and
• a GUI payment confirmation part for at least one record/item (405) for selection by a user and an GUI accept/decline part, where a selection of said GUI part displays payment information (160) comprising one or more of a descriptive part, an amount, an account from where the payment is to be made from and a date of payment, where a selection of accept of said GUI accept/decline part automatically generates an electronic payment comprising one or more of said payment information (160).

5. A system according to claims 1 - 4, **characterized in that** said processing means (301) is further adapted to derive a total amount for at least one given part of said hierarchy by adding all amounts (402) of each record (405) being categorised in the at least one given part of said hierarchy.

6. A system according to claims 1 - 5, **characterized in that** said received data (400) is sent from the information provider (200) and received by the user system (100) in a first representation and that said user system (100) further comprises a converter (301) for converting the received data (400) from the first representation (500) to a second representation (501).

7. A system according to claims 1 - 5, **characterized in that** said received data (400) is sent from the information provider (200) and received by the user system (100) in a second representation and that said information provider (200) comprises a converter for converting the received data (400) from a first representation (500) to the second representation (501).

8. A system according to claims 1 - 7, **characterized in that** said set of rules comprises
• a rule specifying a given part of the hierarchy that a given record/item (405) is to be categorised in on the basis of a part or parts of an identifier (401) of the given record (405), and/or
• a rule specifying a given part of the hierarchy that a given record/item (405) is to be categorised in on the basis of an identifier (401) of the given record (405).

9. A method of automatic accounting of income and expenses, the method comprising the steps of:
• receiving data (400) from at least one remotely located information provider (200) via a data network (300), said received data (400) comprising at least one record/item (405) comprising
○ an identifier (401) specifying the identity of a receiver or provider of a transaction,
○ an amount (402) indicating the value of the transaction, and
○ a date (403) of when the transaction took place,
• automatically categorising said received data (400) according to a given user-modifiable hierarchy comprising at least one part, said categorising being executed on the basis of a set of rules, each rule specifying to which part of the hierarchy a given record/item (405) is to be categorised in on the basis of at least a part of the identifier (401) of the given record (405).

10. A method according to claim 9, **characterized in that** said method further comprises the step of updating said set of rules by registering in a GUI (graphic user interface) a drag-and-drop action performed by a user on a graphic representation of a given record/item (405) and on a graphic representation of a part of said hierarchy (600) and updating said set of rules accordingly.

11. A method according to claims 9 - 10, **characterized in that** said graphic representation of said hierarchy (600) is an explorer-like interface and comprises at least one folder part (601, 602, 603, 604), where each part may comprise one or more folder sub-parts (605).

12. A method according to claims 9 - 11, **characterized in that** said method comprises for one or more of the following steps:
• presentation of a GUI part (622) for at least one record/item (405) for selection by a user, where a selection of said GUI part (622) displays additional relevant and related information, and
• presentation of a GUI payment confirmation part for at least one record/item (405) for selection by a user and presentation of an GUI accept/decline part, where a selection of said GUI part displays payment information (160) comprising one or more of a descriptive part, an amount, an account from where the payment is to be made from and a date of payment, and where a selection of accept of said GUI accept/decline part automatically generates an electronic payment comprising one or more of said payment information (160).

13. A method according to claims 9 - 12, **characterized in that** said method further comprises the step of deriving a total amount for at least one given part of said hierarchy by adding all amounts (402) of each record (405) being categorised in the at least one given part of said hierarchy.

14. A method according to claims 9 - 13, **characterized in that** said received data (400) is sent from the information provider (200) and received by the user system (100) in a first representation and that said method further comprises the step of converting the received data (400) from the first representation (500) to a second representation (501).

15. A method according to claims 9 - 13, **characterized in that** said received data (400) is sent from the information provider (200) and received by the user system (100) in a second representation and that said information provider (200) comprises a converter for converting the received data (400) from a first representation (500) to the second representation (501).

16. A method according to claims 9 - 15, **characterized in that** said set of rules comprises
• a rule specifying a given part of the hierarchy that a given record/item (405) is to be categorised in on the basis of a part or parts of an identifier (401) of the given record (405), and/or
• a rule specifying a given part of the hierarchy that a given record/item (405) is to be categorised in on the basis of an identifier (401) of the given record (405).

17. A computer-readable medium having stored thereon instructions for causing at least one processing unit (301) to execute the method according to any one of claims 9 - 16.

18. A server system for providing information to a user system for automatic accounting of income and expenses, the server system (200) comprising
• communication means (101') for transmitting data (400) to at least one remotely located user system (100) via a data network (300),
• said data (400) comprising at least one record/item (405) comprising
○ an identifier (401) specifying the identity of a receiver or provider of a transaction,
○ an amount (402) indicating the value of the transaction, and
○ a date (403) of when the transaction took place,
and where said data (400) is adapted to be processed by processing means (301) at a user system (100) in order to facilitate automatic categorisation of said data (400) according to a given user-modifiable hierarchy comprising at least one part, said categorising being executed on the basis of a set of rules, each rule specifying to which part of the hierarchy a given record/item (405) is to be categorised in on the basis of at least a part of the identifier (401) of the given record (405).

19. A server system for automatic accounting of income and expenses, the server system (200) comprising
• at least one record/item (405) comprising
○ an identifier (401) specifying the identity of a receiver or provider of a transaction,
○ an amount (402) indicating the value of the transaction, and
○ a date (403) of when the transaction took place,
• processing means (301) for automatically categorising said at least one record/item (405) according to a given user-modifiable hierarchy comprising at least one part, said categorising being executed on the basis of a set of rules, each rule specifying to which part of the hierarchy a given record/item (405) is to be categorised in on the basis of at least a part of the identifier (401) of the given record (405),
• communication means (101) for transmitting data (400) representing said hierarchy, comprising automatically categorised data, to a remotely located user system (100) via a data network (300),

20. Use of a system according to claims 1 - 8 and/or the system according to claim 18 or 19 and/or the method according to claims 9 - 16, where the use relates to browsing said user-modifiable hierarchy and estimating at least part of a budget.
